# EUROPÄISCHE PATENTSCHRIFT

(11) **EP 1 034 676 B1**
(45) Veröffentlichungstag und Bekanntmachung des Hinweises auf die Patenterteilung: **27.06.2001**
(21) Anmeldenummer: 98902927.7
(22) Anmeldetag: 25.02.1998
(51) Int. Cl.: H04Q 7/32

(54) **VERFAHREN UND INFORMATIONSSYSTEM ZUR ÜBERTRAGUNG VON INFORMATIONEN AUF IDENTIFIKATIONSKARTEN**
METHOD AND INFORMATION SYSTEM FOR TRANSFERRING INFORMATION ONTO IDENTITY CARDS
PROCEDE ET SYSTEME D'INFORMATION POUR TRANSFERER DES INFORMATIONS SUR DES CARTES D'IDENTIFICATION

(30) Priorität: 25.11.1997 CH 271697
(43) Veröffentlichungstag der Anmeldung: 13.09.2000
(73) Patentinhaber: Swisscom Mobile AG, 3050 Bern (CH)
(72) Erfinder: BOUQUET, Hanspeter, CH-3032 Hinterkappelen (CH); HEUTSCHI, Walter, CH-3303 Jegensdorf (CH); RITTER, Rudolf, CH-3052 Zollikofen (CH)
(74) Vertreter: BOVARD AG - Patentanwälte
(86) Internationale Anmeldenummer: CH9800076
(87) Internationale Veröffentlichungsnummer: WO9927730

(56) Entgegenhaltungen:
- EP-A- 0 562 890
- EP-A- 0 786 916
- WO-A-98/03026
- DE-C- 19 618 218
- US-A- 5 297 192
- US-A- 5 742 910

## Beschreibung

Die vorliegende Erfindung betrifft ein Verfahren und ein Informationssystem um Informationen auf Identifikationskarten zu übertragen insbesondere betrifft sie ein Verfahren und ein Informationssystem um auf Identifikationskarten gespeicherte kundenspezifische Informationen auf neue Identifikationskarten zu übertragen.

Die Patentschrift EP 481 714 beschreibt ein Kommunikationsnetzwerk, in welchem jeder Teilnehmer mittels einem Token, beispielsweise einer Smartcard, identifiziert wird, indem auf der Smartcard eine eindeutige Identifikationsnummer (International Mobile Subscriber Identifier, IMSI) gespeichert ist, die beim Einloggen dem Netzwerk zur Identifikation übergeben wird. Insbesondere beschreibt EP 481 714 wie eine Ersatz-Smartcard mit einem neuen IMSI ins Netzwerk eingeführt wird, worauf dieses die Ersatz-Smartcard als solche erkennt, die Rufnummer (MSISDN) des Teilnehmers mit der IMSI der Ersatz-Smartcard assoziiert und abspeichert, und samtliche Referenzen zur IMSI der vorherigen Smartcard löscht. Für diesen Zweck wird gemäss EP 481 714 die IMSI der Ersatz-Smartcard zusammen mit der IMSI der vorherigen, zu ersetzenden Smartcard in einem Home Location Register (HLR) des Kommunikationsnetzwerks abgespeichert. Zur Authentifizierung der Ersatz-Smartcard werden zudem auch Sicherheitsdaten auf der Ersatz-Smartcard und in einer Authentication Unit (AUC) des Kommunikationsnetzwerks gespeichert.

Ein ähnliches Kommunikationsnetzwerk mit einem ähnlichen Verfahren zur Ersetzung einer Smartcard oder einer Subscriber Identity Module (SIM) Karte wird im Dokument WO 97/01253 beschrieben. Gemäss diesem Dokument ist in einem HLR des Kommunikationsnetzwerks für jeden Teilnehmer ein der SIM-Karten Identifikationsnummer (IMSI) zugehöriges Teilnehmerprofil mit autorisierten Diensten des Teilnehmers gespeichert, betreffend welchem, in einer Post-Personalizing Phase nach dem Sperren der ersetzten SIM-Karte, Informationen auf die Ersatzkarte geladen werden.

Neben einer Identifikationsnummer, Sicherheitsdaten und Teilnehmerprofilen können auf einer Smartcard oder SIM-Karte auch Informationen gespeichert werden, welche vom Teilnehmer eingegeben werden. Beim Ersetzen einer SIM-Karte müssen solche kundenspezifischen Informationen üblicherweise vom Teilnehmer auf mühsame Weise wieder eingegeben und auf der Ersatzkarte abgespeichert werden.

Die Patentanmeldung EP 786 916 A beschreibt ein Verfahren um Daten, die auf einer ersten, in ein erstes Mobilfunktelefon eingeführten SIM-Karte gespeichert sind, über ein Mobilnetz auf eine zweite, in ein zweites Mobilfunktelefon eingeführte SIM-Karte zu kopieren, nachdem ein betreffender Benutzer einen entsprechenden Kopierbefehl mittels der Tastatur seines ersten Mobilgeräts eingegeben hat und nachdem der betreffende Benutzer einen entsprechenden Aktualisierungsbefehl mittels der Tastatur seines zweiten Mobilgeräts eingegeben hat.

Die Patentanmeldung EP 562 890 A beschreibt, dass SIM-Karten mit Software versehen werden, die es der SIM-Karte jeweils ermöglicht, sich in Antwort auf ein empfangenes geeignetes Signal selber zu rekonfigurieren, wobei das geeignete Signal im Netzwerk gespeichert wird und mittels Kurzmeldungen an die SIM-Karte übertragen wird. Gemäss der Patentanmeldung EP 562 890 A muss ein Benutzer, der zur Erweiterung seiner Funktionen Daten auf seiner SIM-Karte ändern lassen will, zunächst den Lieferanten der SIM-Karte entsprechend benachrichtigen. Der Lieferant trifft dann Vorkehrungen, dass im Netzwerk ein geeignetes Signal gespeichert wird, welches Signal unmittelbar oder erneut später an die sich in einem Mobilgerät befindende SIM-Karte übertragen wird, wo es dann durch die oben genannte Software verarbeitet wird.

Es ist eine Aufgabe dieser Erfindung ein neues und besseres Verfahren und Informationssystem vorzuschlagen, welches ermöglicht auf Identifikationskarten gespeicherte kundenspezifische Informationen auf neue Identifikationskarten zu übertragen, ohne dass diese vom Kunden wieder eingegeben werden müssen.

Gemäss der vorliegenden Erfindung werden diese Ziele insbesondere durch die Elemente des kennzeichnenden Teils der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass die auf Initiative von Kunden auf Identifikationskarten gespeicherten kundenspezifischen Informationen von einem Informationssystem direkt von den sich in Mobilgeräten befindenden Identifikationskarten erfasst und in diesen Kunden zur Verfügung gestellten Speicherplätzen einer zentralen Datenbank gespeichert werden, und von diesem Informationssystem auf die neuen Identifikationskarten übertragen werden. Dies hat insbesondere den Vorteil, dass die kundenspezifischen Informationen beispielsweise in Fällen von durch Diebstahl oder anderweitigen Verlust abhanden gekommenen Karten für die Abspeicherung auf Ersatzkarten zur Verfügung stehen.

Vorzugsweise werden die kundenspezifischen Informationen vom Informationssystem mittels über ein Mobilfunknetz übertragenen speziellen Kurzmeldungen, zum Beispiel in einem GSM-Netz mittels SMS oder USSD Meldungen, direkt von den sich in Mobilgeräten befindenden Identifikationskarten erfasst. Dies hat den Vorteil, dass dies für den Kunden transparent vorgenommen werden kann und er sich nicht mit anderen Vorrichtungen oder Diensten um die Speicherung seiner kundenspezifischen Informationen ausserhalb des Mobilgerätes kümmern muss.

Einem Kunden, der allerdings die Vorteile eines komfortableren, mit zusätzlichen Funktionen ausgerüsteten Dienstes in Anspruch nehmen will, werden vorzugsweise auf dem Internet Dienste angeboten, mittels welchen er seine kundenspezifischen Informationen verwalten und an das Informationssystem übertragen kann.

Einem Kunden, der beispielsweise die Vorteile von kundenspezifischen Informationen ausnützen möchte aber diese weder über Eingabemittel des Mobilgerätes noch mittels Internetdiensten selber eingeben will, kann angeboten werden, die kundenspezifischen Informationen auf einem Formular schriftlich zu übermitteln, wobei diese dann vom Informationssystem mittels einem Belegleser erfasst würden.

Vorzugsweise überträgt das Informationssystem die kundenspezifischen Informationen mittels speziellen Kurzmeldungen über ein Mobilfunknetz auf neue sich in Mobilgeräten befindende Identifikationskarten.

In Fällen, in welchen eine grosse Anzahl von Identifikationskarten ersetzt werden muss, erweist es sich als vorteilhaft, dass das Informationssystem die kundenspezifischen Informationen vorzugsweise mittels einem Identifikationskarten-Programmiergerät auf die neuen Identifikationskarten überträgt, welche anschliessend durch die Post an die Kunden verschickt werden.

Nachfolgend wird eine Ausführung der vorliegenden Erfindung anhand eines Beispieles beschrieben. Das Beispiel der Ausführung wird durch folgende beigelegte Figur illustriert:

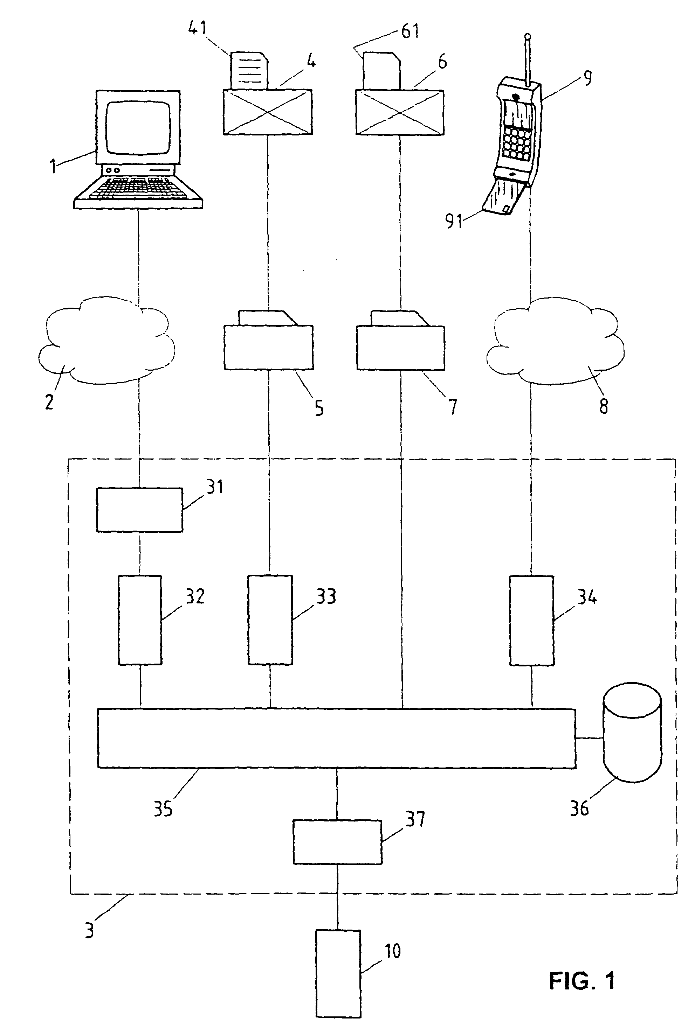

Fig. 1 zeigt ein Übersichtsdiagramm eines Informationssystems, welches eine Datenbank umfasst, mit einem Mobilfunknetz und einem Fixnetz verbunden ist, und Zugang zu einem Belegleser sowie zu einem Identifikationskarten-Programmiergerät hat.

In Fig. 1 verweist die Bezugsziffer 3 auf ein Informationssystem, dessen Umfang mittels einer gestrichelten Linie dargestellt ist und welches mehrere Komponenten umfasst, die im folgenden Text näher erläutert werden. Grundsätzlich können alle vom Informationssystem 3 umfassten Komponenten auf einem gemeinsamen Computer implementiert werden, der Fachmann kennt allerdings praktische Richtlinien und Regeln, die ihm helfen zu entscheiden ob beispielsweise eine Firewall 31, ein Web-Server 32, ein Identifikationskarten-Dienstzentrum 34, ein Applikations-Server 35, eine Datenbank 36 oder ein Gateway 37 besser auf einem separaten, eigenen Computer implementiert werden sollten.

In einer zentralen Datenbank 36 des Informationssystems 3 werden Kunden, die beispielsweise Teilnehmer in einem Mobilfunknetz 8 sind, zum Beispiel in einem GSM-Netz oder in einem UMTS-Netz, und die mindestens eine Identifikationskarte 91 besitzen - vorzugsweise eine Chipkarte, beispielsweise eine SIM-Karte 91, welche über einen Prozessor und Speichermittel verfügt - Speicherplätze zur Verfügung gestellt, in denen sie kundenspezifische Informationen speichern oder abspeichern lassen können, welche auf ihre Initiative auf ihrer SIM-Karte 91 gespeichert sind. Diese Speicherplätze können beispielsweise gegen eine monatliche Gebühr an die Kunden vermietet werden, wobei der Preis je nach benötigtem Speicherplatz berechnet oder ein fester Preis für einen reservierten Speicherbereich von bestimmter Grösse angesetzt werden kann. Die Verrechnung der Speicherplätze für die Kunden kann auch als Teil eines entsprechenden Dienstes erfolgen.

Dem Kunden werden verschiedene Backup-Dienste zur Verfügung gestellt um die in seiner SIM-Karte 91 gespeicherten kundenspezifischen Informationen in der zentralen Datenbank 36 abzuspeichern.

In einem ersten Backup-Dienst werden die kundenspezifischen Informationen, beispielsweise mittels speziellen Kurzmeldungen, von der sich in einem Endgerät, beispielsweise in einem Mobilgerät 9, insbesondere in einem Mobilfunktelefon, befindenden SIM-Karte 91 über ein Kommunikationsnetzwerk, beispielsweise ein Mobilfunknetz 8, insbesondere ein GSM-Netz oder ein UMTS-Netz, ins Informationssystem 3 übertragen, wo sie von einem

Identifikationskarten-Dienstzentrum 34, insbesondere von einem SIM-Server 34, beispielsweise ein SIM-Karten-Dienstzentrum (SSC) 34, empfangen und mittels einem speziellen Dienst, der beispielsweise auf dem Applikations-Server 35 ausgeführt wird, im entsprechenden Speicherplatz des Kunden auf der Datenbank 36 abgespeichert werden. Dies kann so ausgeführt werden, dass das SSC 34 mittels speziellen Diensten die SIM-Karten 91 der Mobilgeräte 9 periodisch zur Übermittlung ihrer kundenspezifischen Informationen auffordert, beispielsweise für Mobilgerate 9 von Kunden, die einen solchen speziellen Dienst abonniert haben, oder dass die kundenspezifischen Informationen von der SIM-Karte 91 mittels speziellen Kurzmeldungen, beispielsweise SMS oder USSD Meldungen, an das SSC 34 übertragen werden, sobald der Kunde neue kundenspezifische Informationen mit Eingabemitteln des Mobilgerätes 9 eingibt und auf der SIM-Karte 91 abspeichert oder sobald er mittels den Eingabemitteln einen entsprechenden speziellen Dienst anwählt. Generell werden in diesem Ausführungsbeispiel spezielle Dienste vorzugsweise gemäss dem SICAP Verfahren, welches unter anderem in EP 689 368 beschriebenen worden ist, oder gemäss einem ähnlichen Verfahren ausgeführt.

In einem zweiten Backup-Dienst werden die kundenspezifischen Informationen vom Kunden mittels Internetdiensten verwaltet. Der Kunde greift mittels einem Endgerät, beispielsweise mit einem PC, einem Laptop oder Palmtop Computer, über ein Kommunikationsnetz, beispielsweise ein Fixnetz oder ein Mobilfunknetz, auf das Internet zu und wählt die entsprechenden Dienste auf dem Web-Server 32 des Informationssystems 3 an, welches mittels einer dem Fachmann bekannten Firewall 31 von unberechtigten Zugriffen und Attacken über das Internet geschützt ist. Zudem ist der Zugang auf die Dienste des Web-Servers 32 mittels speziellen Kundennummern und/oder Passwörtern gesichert. Der Web-Server 32 ist beispielsweise ein Java-Server der mittels Java-Applets direkt auf die Datenbank 36 zugreift oder der Aufträge, beispielsweise Client-Server-mässig, über den Applikations-Server 35 abwickelt, welcher dann auf die Datenbank 36 zugreift. Dem Kunden werden über diese Internetdienste Zugang auf die kundenspezifischen Informationen auf allen seinen SIM-Karten ermöglicht, und er kann Dienste wie Auflisten, Sortieren, Einfügen, Ändern, oder Löschen von seinen kundenspezifischen Informationen ausführen. Es kann auch vorgesehen sein, dass diese Dienste auf Antrag des Kunden in einem Administrationszentrum durch berechtigte Mitarbeiter des Betreibers des Informationszentrums 3 ausgeführt werden, indem diese Mitarbeiter beispielsweise direkt auf die obengenannten Dienste zugreifen können, ohne über das Internet gehen zu müssen. Auf diesem Wege ist es für diese Mitarbeiter auch möglich, auf Antrag der Kunden kundenspezifische Informationen einzugeben, welche von den Kunden selber nicht eingegeben werden können, die aber auf diesem Weg in die Datenbank 36 gelangen und von dort dann auch auf entsprechende SIM-Karten übertragen werden können. Auf Beispiele von solchen und anderen kundenspezifischen Informationen wird später in diesem Text noch ausführlicher eingegangen werden.

In einem weiteren Backup-Dienst könnten die kundenspezifischen Informationen vom Kunden auch auf einem dafür bestimmten maschinenlesbaren Formular 41 schriftlich eingetragen und mittels einer Postsendung 4 an das Administrationszentrum des Betreibers des Informationszentrums 3 geschickt werden. Die erhaltenen Formulare 41 könnten dort von einem Belegleser 5 gelesen werden, beispielsweise ein Scanner mit Optical Character Recognition (OCR), der die darauf geschriebenen kundenspezifischen Informationen in elektronischer Form erfassen und an einen Papierverarbeitungs-Server 33 des Informationssystems 3 zur Weiterverarbeitung übergeben würde. Im Papierverarbeitungs-Server 33 könnten die empfangenen Daten nach Vollständigkeit überprüft und etwaige nicht erkannte Zeichen angezeigt und die betreffenden Einträge (beispielsweise eine Zeile mit einer nicht erkannten Ziffer) beispielsweise für die manuelle Vervollständigung, durch Mitarbeiter des Administrationszentrum oder durch den Kunden, markiert werden. Je nach Ausführungsvariante würden die erkannten Einträge (beispielsweise eine vollständig erkannte Zeile) vor oder nach der Vervollständigung aller unvollständigen Einträge an den Applikations-Server 35 weitergeleitet. Auf dem Applikations-Server würden, beispielsweise gemäss den durch den Kunden auf dem Formular 41 angegebenen Instruktionen, Dienste ausgeführt wie sie bereits oben im Zusammenhang mit den Internetdiensten erwähnt wurden, so dass die Speicherplätze des Kunden auf der Datenbank 36 mit den eingesandten kundenspezifischen Informationen aktualisiert würden. Der Kunde könnte über die Resultate dieser Aktualisierung beispielsweise schriftlich oder elektronisch mit einem Qualitätsbericht, der zum Beispiel die Anzahl erkannter, nicht erkannter, abgespeicherten und zu korrigierenden Einträge enthält, informiert werden.

Es kann auch vorteilhaft sein, dass gewisse in der Datenbank 36 gespeicherte kundenspezifische Informationen auf Initiative des Informationssystems 3, beispielsweise bezüglich den aktuellen Werten von entsprechenden Informationen in einem Kommunikationssystem, aktualisiert werden. Das Informationssystem 3 benötigt dafür natürlich Zugang auf diese aktuellen Werte, zum Beispiel durch Zugriff auf die entsprechenden Datenbanken des betreffenden Kommunikationssystems oder auf lokale Kopien oder Auszüge der aktuellen Werte, für welche das betreffende Kommunikationssystem zum Beispiel dem Informationssystem 3 jeweils neue aktuelle Werte periodisch oder jeweils unmittelbar nach einer Änderung übermittelt. Beispielsweise können Änderungen von Rufnummern in einem Kommunikationsnetzwerk, beispielsweise in einem Mobilfunknetz 8 und/oder in einem Fixnetz, zum Beispiel wegen Umzug von Kunden oder in Folge einer Umnummerierung im Netz, dem Informationssystem 3 übermittelt oder zugänglich gemacht werden und von einem dafür verantwortlichen Prozess im Applikations-Server 35 entsprechend auf die kundenspezifischen Informationen in der Datenbank 36 übertragen werden, indem dort die entsprechenden gespeicherten Rufnummern aktualisiert werden. Zudem könnten in einer entsprechenden Variante beispielsweise auch URL Internet Adressen aktualisiert werden, die sich zum Beispiel seit dem letzten Zugriff des Kunden verändert haben. Offensichtlich hat dies den Vorteil, dass die Kunden solche Änderungen von Rufnummern oder URL Adressen nicht selber aktualisieren müssen, was natürlich besonders vorteilhaft ist, wenn diese aktualisierten Informationen von einem entsprechenden Dienst auf die SIM-Karten der entsprechenden Kunden übertragen werden.

Im Informationssystem 3 gibt es verschiedene Restore-Dienste um die in der zentralen Datenbank 36 gespeicherten kundenspezifischen Informationen auf eine neue SIM-Karte zu übertragen und dort abzuspeichern. Wo es sinnvoll ist, beispielsweise wenn die kundenspezifischen Informationen zuerst im betreffenden Speicherplatz des Kunden auf der Datenbank 36 abgespeichert werden, können die kundenspezifischen Informationen auch an SIM-Karten übertragen werden, die nicht neu zu sein brauchen, das heisst anstelle einer Übertragung von kundenspezifischen Informationen im Sinne eines Backup/Restore von einer alten SIM-Karte auf eine neue Ersatzkarte kann durchaus auch eine Erstübertragung im Sinne eines Store/Transfer auf eine SIM-Karte ausgeführt werden, die nicht neu ist. Dadurch können beispielsweise die oben erwähnten vom Informationssystem 3 aktualisierten kundenspezifischen Informationen automatisch auf die SIM-Karten 91 übertragen werden.

In einem ersten Restore-Dienst für die Übertragung und Abspeicherung von kundenspezifischen Informationen aus dem Speicherplatz eines Kunden in der Datenbank 36 auf eine SIM-Karte 91 werden diese Informationen vom Informationssystem 3, beispielsweise mittels speziellen Kurzmeldungen wie SMS oder USSD, über ein Kommunikationsnetz, beispielsweise über ein Mobilfunknetz 8, insbesondere über ein GSM-Netz oder ein UMTS-Netz, auf die sich in einem Endgerät, beispielsweise in einem Mobilgerät 9, insbesondere in einem Mobilfunktelefon, befindende SIM-Karte 91 übertragen. Dies kann so ausgeführt werden, dass das SSC 34, vorzugsweise gemäss dem oben erwähnten SICAP Verfahren, mittels speziellen Diensten, welche beispielsweise auf dem Applikations-Server 35 ausgeführt werden, auf die Speicherplätze eines Kunden in der Datenbank 36 zugreift und die dort gespeicherten kundenspezifischen Informationen entnimmt und mittels speziellen Kurzmeldungen über das Mobilfunknetz 8 auf die SIM-Karte 91 überträgt, welche über entsprechende spezielle Dienste für den Empfang und die Abspeicherung der kundenspezifischen Informationen verfügt. Eine Übertragung gemäss diesem ersten Restore-Dienst kann dadurch ausgelöst werden, dass ein Kunde diesen speziellen Dienst mittels speziellen Kurzmeldungen anfordert, dass der Restore-Dienst durch verändern der kundenspezifischen Informationen in den Speicherplätzen des betreffenden Kunden, beispielsweise mittels den erwähnten Internetdiensten oder durch den Papierverarbeitungs-Server, im Informationssystem 3 getriggert wird, oder dass der Restore-Dienst durch die erstmalige Benutzung einer Ersatzkarte, wie beispielsweise in EP 481 714 beschrieben, initiiert wird.

In einem zweiten Restore-Dienst für die Übertragung und Abspeicherung von kundenspezifischen Informationen auf eine SIM-Karte 61 werden diese Informationen vom Informationssystem 3, mittels einem Identifikationskarten-Programmiergerät 7 auf die neuen SIM-Karten 61 übertragen und abgespeichert, und anschliessend in einer Postsendung 6 an die entsprechenden Kunden versandt. Dies wird beispielsweise so ausgeführt, dass entsprechende Dienste im Applikations-Server 35 auf die Speicherplätze des Kunden in der Datenbank 36 zugreifen und die kundenspezifischen Informationen entnehmen und für die Abspeicherung dem Identifikationskarten-Programmiergerät 7 übergeben. Typischerweise wird dieser Restore-Dienst vom Informationssystem 3 gewählt, wenn beispielsweise eine grosse Anzahl einer neuen Generation von SIM-Karten 61 an Kunden verschickt werden muss oder wenn ein Kunde diese Variante der Übertragung ausdrücklich wünscht, beispielsweise durch ankreuzen einer entsprechenden Option auf dem Formular 41 zur Übermittlung von kundenspezifischen Informationen, oder wenn ein Kunde nur eine SIM-Karte besitzt, welche nicht für eine elektronische Übertragung von solchen Informationen ausgerüstet ist.

Es kann zudem vorteilhaft sein die oben erwähnten Dienste entsprechend zu erweitern und zu kombinieren um einem Kunden zu ermöglichen die auf seiner SIM-Karte 91 gespeicherten kundenspezifischen Informationen mittels Internetdiensten auf derselben zu lesen, zu ändern und zu erweitern. Der Vorteil besteht darin, dass einem Kunden komfortable Dienste für die unmittelbare Verwaltung seiner kundenspezifischen Informationen auf seiner SIM-Karte 91 zur Verfügung gestellt werden können, welche natürlich gleichzeitig auch in der Datenbank 36 abgespeichert werden können. Für diesen Zweck wird der Fachmann beispielsweise die oben beschriebene Funktionalität der ersten Backup-Dienste, der zweiten Backup-Dienste und der ersten Restore-Dienste entsprechend erweitern und kombinieren.

Für die Verrechnung sämtlicher solcher Dienste, beispielsweise der beschriebenen Backup- und Restore-Dienste steht dem Applikations-Server 35 ein Gateway 37 zur Verfügung, mittels welchem er gesichert auf die Gebührenerfassungsdienste 10 zugreifen kann. Dies hat den Vorteil, dass sämtliche dieser beschriebenen Dienste einem Kunden, der diese Dienste benützt hat, verrechnet werden können, indem die Dienste über den Gateway 37 beispielsweise Call Data Records (CDR) an die Gebührenerfassungsdienste 10 übermitteln, basierend auf welche durch die Gebührenerfassungsdienste 10 Gebühren berechnet und beispielsweise in die Standardrechnung des betreffenden Kunden integriert oder separat verrechnet werden.

Es bleibt zu erwähnen, dass der Austausch von Daten zwischen dem Informationssystem 3 und den Endgeräten 1, 9 der Kunden vorzugsweise unter Zuhilfenahme von Sicherheitsdiensten, beispielsweise mittels TTP (Trusted Third Party) oder einem entsprechenden Verfahren, erfolgt, um die Vertraulichkeit, die Authentizität, die Nichtabstreitbarkeit des Ursprungs und die Integrität der Daten und vor allem auch die Authentizitat des betreffenden Senders, das heisst des Kunden oder des Informationssystems, zu gewährleisten.

Als Beispiele von kundenspezifischen Informationen sollen hier, vor allem im Zusammenhang von Mobilgeräten 9, insbesondere im Zusammenhang von Mobilfunktelefonen, Telefonnummern, Namen, und Adressen erwähnt werden, wobei beispielsweise aber auch URL Internet-Adressen (Uniform Resource Locator) als kundenspezifische Informationen abgespeichert werden können. Es können aber durchaus auch andere kundenspezifische Informationen wie kundenspezifische biometrische Schlüssel für Authentifizierungszwecke, vorausbezahlte Geldbeträge, oder auch Dateien und Programme für spezielle Dienste im beschriebenen Verfahren und Informationssystem einbezogen werden. Vor allem im Zusammenhang mit generischen Identifikationskarten, das heisst Chip-Karten oder Smartcards mit enthaltener Identifizierung des Benutzers, welche in mehreren Systemen, beispielsweise in Systemen der Mobilfunktelefonie, Systemen für Bargeldbezug von Bankautomaten, in Kreditkartensystemen, in Systemen für elektronische Zahlungsmittel, in Zutrittskontrollsystemen für Bahnen, Gebäude oder verschiedene Kommunikationsnetzwerke, oder in anderen Systemen und in verschiedenen Endgeräten benutzt werden können gibt es weitere kundenspezifische Informationen, beispielsweise verschiedene Identifikationsnummern des Benutzers für die verschiedenen Systeme oder andere kundenspezifische Systemparameter, die alle mit dem hier beschriebenen Verfahren und Informationssystem in Speicherplätzen des Kunden auf der Datenbank 36 gesichert abgespeichert und bei Bedarf auf eine SIM-Karte geladen werden können.

## Patentansprüche

1. Verfahren, um auf ersten Identifikationskarten (91) gespeicherte Informationen auf neue zweite Identifikationskarten (61, 91) zu übertragen, dadurch gekennzeichnet, dass die auf Initiative von Kunden auf ersten Identifikationskarten (91) gespeicherten kundenspezifischen Informationen von einem Informationssystem (3) direkt von den genannten sich in Endgeräten befindenden ersten Identifikationskarten über ein Kommunikationsnetz erfasst und in diesen Kunden zur Verfügung gestellten Speicherplätzen einer zentralen Datenbank (36) gespeichert werden, und von diesem Informationssystem (3) auf die neuen zweiten Identifikationskarten (61, 91) übertragen werden.

2. Verfahren gemäss vorhergehendem Anspruch, dadurch gekennzeichnet, dass das genannte Informationssystem (3) die genannten kundenspezifischen Informationen mittels über ein Mobilfunknetz (8) übertragenen speziellen Kurzmeldungen direkt von den genannten sich in Mobilgeräten (9) befindenden ersten Identifikationskarten (91) erfasst.

3. Verfahren gemäss einem der vorhergehenden Ansprüche, dadurch gekennzeichnet, dass die genannten kundenspezifischen Informationen von mindestens gewissen Kunden mittels Internetdiensten im genannten Informationssystem (3) verwaltet werden.

4. Verfahren gemäss einem der vorhergehenden Ansprüche, dadurch gekennzeichnet, dass mindestens gewisse der bereits vom genannten Informationssystem (3) erfassten genannten kundenspezifischen Informationen vom genannten Informationssystem (3) auf dessen Initiative aktualisiert werden.

5. Verfahren gemäss einem der vorhergehenden Ansprüche, dadurch gekennzeichnet, dass das genannte Informationssystem (3) die genannten kundenspezifischen Informationen über ein Kommunikationsnetz auf die neuen zweiten sich in Endgeräten befindenden Identifikationskarten überträgt.

6. Verfahren gemäss einem der vorhergehenden Ansprüche, dadurch gekennzeichnet, dass das genannte Informationssystem (3) die genannten kundenspezifischen Informationen mittels über ein Mobilfunknetz (8) übertragenen speziellen Kurzmeldungen auf die neuen zweiten sich in Mobilgeräten (9) befindenden Identifikationskarten (91) überträgt.

7. Verfahren gemäss einem der Ansprüche 1 bis 5, dadurch gekennzeichnet, dass das genannte Informationssystem (3) die genannten kundenspezifischen Informationen mittels einem Identifikationskarten-Programmiergerät (7) auf die neuen zweiten Identifikationskarten (61) überträgt.

8. Verfahren gemäss einem der vorhergehenden Ansprüche, dadurch gekennzeichnet, dass die genannten neuen zweiten Identifikationskarten (61, 91) Identifikationskarten umfassen, die vom gleichen ersten Typ sind wie die genannten ersten Identifikationskarten (91).

9. Verfahren gemäss einem der Ansprüche 1 bis 7, dadurch gekennzeichnet, dass die genannten neuen zweiten Identifikationskarten (61, 91) Identifikationskarten umfassen, die von einem neuen zweiten Typ sind.

10. Verfahren, um auf Identifikationskarten (91) auf Initiative von Kunden gespeicherte kundenspezifische Informationen bezüglich aktuelle Werte von entsprechenden Informationen in einem Kommunikationssystem zu aktualisieren, dadurch gekennzeichnet, dass die genannten kundenspezifischen Informationen von einem Informationssystem (3) direkt von den genannten sich in Endgeräten befindenden Identifikationskarten über ein Kommunikationsnetz erfasst und in diesen Kunden zur Verfügung gestellten Speicherplätzen einer zentralen Datenbank (36) gespeichert werden, dass die Werte der in der Datenbank (36) gespeicherten genannten kundenspezifischen Informationen vom genannten Informationssystem (3) mit den genannten aktuellen Werten aktualisiert und die aktualisierten kundenspezifischen Informationen auf die sich in Endgeräten befindenden genannten Identifikationskarten (91) übertragen werden.

11. Verfahren gemäss vorhergehendem Anspruch, dadurch gekennzeichnet, dass das genannte Informationssystem (3) die genannten kundenspezifischen Informationen mittels über ein Mobilfunknetz (8) übertragenen speziellen Kurzmeldungen direkt von den genannten sich in Mobilgeräten (9) befindenden Identifikationskarten (91) erfasst.

12. Verfahren gemäss einem der Ansprüche 10 bis 11, dadurch gekennzeichnet, dass die genannten kundenspezifischen Informationen von mindestens gewissen Kunden mittels Internetdiensten verwaltet und an das genannte Informationssystem (3) übertragen werden.

13. Verfahren gemäss einem der Ansprüche 10 bis 12, dadurch gekennzeichnet, dass das genannte Informationssystem (3) die genannten aktualisierten kundenspezifischen Informationen über ein Kommunikationsnetz auf die sich in Endgeräten befindenden Identifikationskarten (91) überträgt.

14. Verfahren gemäss einem der Ansprüche 10 bis 13, dadurch gekennzeichnet, dass das genannte Informationssystem (3) die genannten aktualisierten kundenspezifischen Informationen mittels über ein Mobilfunknetz (8) übertragenen speziellen Kurzmeldungen auf die sich in Mobilgeräten (9) befindenden Identifikationskarten (91) überträgt.

15. Verfahren gemäss einem der Ansprüche 10 bis 14, dadurch gekennzeichnet, dass die genannten aktuellen Werte Rufnummern in einem Kommunikationsnetz sind.

16. Verfahren gemäss einem der Ansprüche 10 bis 15, dadurch gekennzeichnet, dass die genannten aktuellen Werte URL-Adressen in einem Kommunikationsnetz sind.

17. Informationssystem (3) in einem Kommunikationsnetz (2, 8), dadurch gekennzeichnet, dass es ein Identifikationskarten-Dienstzentrum (34) umfasst, welches kundenspezifische Informationen, die auf Initiative von Kunden auf ersten Identifikationskarten (61, 91) dieser Kunden gespeichert sind, direkt von sich in Endgeräten befindenden ersten Identifikationskarten über ein Kommunikationsnetz erfasst und in einer Datenbank (36) des Informationssystems (3) speichert, wobei in der Datenbank (36) einer Vielzahl von Kunden in diesem Netz ein Speicherplatz zur Verfügung gestellt wird, um die kundenspezifischen Informationen zentralisiert zu speichern.

18. Informationssystem (3) gemäss vorhergehendem Anspruch, dadurch gekennzeichnet, dass es ein Identifikationskarten-Dienstzentrum (34) umfasst, welches kundenspezifische Informationen mittels über ein Mobilfunknetz (8) übertragenen speziellen Kurzmeldungen direkt von sich in Mobilgeräten (9) befindenden ersten Identifikationskarten (91) erfasst.

19. Informationssystem (3) gemäss einem der Ansprüche 17 bis 18, dadurch gekennzeichnet, dass es einen Web-Server (32) umfasst, welcher Internetdienste anbietet, mittels welchen kundenspezifische Informationen von mindestens gewissen Kunden im Informationssystem (3) verwaltet werden können.

20. Informationssystem (3) gemäss einem der Ansprüche 17 bis 19, dadurch gekennzeichnet, dass es einen Applikations-Server (35) umfasst, welcher Zugang auf die genannte Datenbank (36) hat und welcher auf seine Initiative mindestens gewisse kundenspezifische Informationen aktualisiert.

21. Informationssystem (3) gemäss einem der Ansprüche 17 bis 20, dadurch gekennzeichnet, dass es ein Identifikationskarten-Dienstzentrum (34) umfasst, welches Zugang auf die genannte Datenbank (36) hat und welches kundenspezifische Informationen über ein Kommunikationsnetz auf neue zweite sich in Endgeräten befindende Identifikationskarten überträgt.

22. Informationssystem (3) gemäss einem der Ansprüche 17 bis 21, dadurch gekennzeichnet, dass es ein Identifikationskarten-Dienstzentrum (34) umfasst, welches Zugang auf die genannte Datenbank (36) hat und welches kundenspezifische Informationen mittels über ein Mobilfunknetz (8) übertragenen speziellen Kurzmeldungen auf neue zweite sich in Mobilgeräten (9) befindende Identifikationskarten (91) überträgt.

23. Informationssystem (3) gemäss einem der Ansprüche 17 bis 21, dadurch gekennzeichnet, dass es einen Applikations-Server (35) umfasst, welcher Zugang auf die genannte Datenbank (36) hat und welcher kundenspezifische Informationen einem Identifikationskarten-Programmiergerät (7) übergibt, um sie von diesem auf neue zweite Identifikationskarten (61) übertragen zu lassen.

24. Informationssystem (3) gemäss einem der Ansprüche 17 bis 23, dadurch gekennzeichnet, dass es einen Gateway (37) umfasst, welcher einen gesicherten Zugriff des Applikations-Servers (35) auf Gebührenerfassungsdienste (10) ermöglicht.

## Claims

1. Method to transfer information stored on first identification cards (91) onto new second identification cards (61, 91), characterised in that client-specific information stored on clients' initiative on first identification cards (91) is captured, via a communications network, directly from the said first identification cards located in terminal devices and is stored in memory locations made available to these clients in a central database (36) and is transferred onto the new second identification cards (61, 91) by this information system (3).

2. Method according to the preceding claim, characterised in that the said information system (3) captures the said client-specific information by means of special short messages transmitted over a mobile radio network (8) directly from the said first identification cards (91) located in mobile devices (9).

3. Method according to one of the preceding claims, characterised in that the said client-specific information is administered in the said information system (3) by at least certain clients by means of Internet services.

4. Method according to one of the preceding claims, characterised in that at least certain of the said client-specific information already captured by the said information system (3) is updated by the said information system (3) on its initiative.

5. Method according to one of the preceding claims, characterised in that the said information system (3) transfers the said client-specific information via a communications network onto the new second identification cards located in terminal devices.

6. Method according to one of the preceding claims, characterised in that the said information system (3) transfers the said client-specific information by means of special short messages transmitted over a mobile radio network (8) onto the new second identification cards (91) located in mobile devices (9).

7. Method according to one of the claims 1 to 5, characterised in that the said information system (3) transfers the said client-specific information by means of an identification card programming device (7) onto the new second identification cards (61).

8. Method according to one of the preceding claims, characterised in that the said new second identification cards (61, 91) include identification cards of the same first type as the said first identification cards (91).

9. Method according to one of the claims 1 to 7, characterised in that the said new second identification cards (61, 91) include identification cards of a new second type.

10. Method to update client-specific information stored on clients' initiative on identification cards (91) with respect to current values of corresponding information in a communications system, characterised in that the said client-specific information is captured by an information system (3), via a communications network, directly from the said identification cards located in terminal devices, and is stored in memory locations made available to these clients in a central database (36), in that the values of the said client-specific information stored in the database (36) are updated by the information system (3) with the said current values, and the updated client-specific information is transferred onto the said identification cards (91) located in terminal devices.

11. Method according to the preceding claim, characterised in that the said information system (3) captures the said client-specific information by means of special short messages transmitted over a mobile radio network (8) directly from the said identification cards (91) located in mobile devices (9).

12. Method according to one of the claims 10 to 11, characterised in that the said client-specific information is administered by at least certain clients by means of Internet services and transmitted to the said information system (3).

13. Method according to one of the claims 10 to 12, characterised in that the said information system (3) transfers the said updated client-specific information via a communications network onto the identification cards (91) located in terminal devices.

14. Method according to one of the claims 10 to 13, characterised in that the said information system (3) transfers the said updated client-specific information by means of special short messages transmitted over a mobile radio network (8) onto the identification cards (91) located in mobile devices (9).

15. Method according to one of the claims 10 to 14, characterised in that the said current values are call numbers in a communications network.

16. Method according to one of the claims 10 to 15, characterised in that the said current values are URL addresses in a communications network.

17. Information system (3) in a communications network (2, 8), characterised in that it comprises an identification card service centre (34) which captures client-specific information stored on clients' initiative on first identification cards (61, 91) of these clients, via a communications network, directly from first identification cards located in terminal devices, and stores it in a database (36) of the information system (3), a memory location being made available in the database (36) to a multiplicity of clients in this network to store in a centralised fashion client-specific information.

18. Information system (3) according the preceding claim, characterised in that it comprises an identification card service centre (34) which captures client-specific information by means of special short messages transmitted over a mobile radio network (8) directly from first identification cards (91) located in mobile devices (9).

19. Information system (3) according to one of the claims 17 to 18, characterised in that it comprises a web server (32) which offers Internet services by means of which client-specific information in the information system (3) is administered by at least certain clients.

20. Information system (3) according to one of the claims 17 to 19, characterised in that it comprises an applications server (35) which has access to said database (36) and which updates on its initiative at least certain client-specific information.

21. Information system (3) according to one of the claims 17 to 20, characterised in that it comprises an identification card service centre (34) which has access to said database (36) and which transfers client-specific information via a communications network onto new second identification cards located in terminal devices.

22. Information system (3) according to one of the claims 17 to 21, characterised in that it comprises an identification card service centre (34) which has access to said database (36) and which .transfers client-specific information by means of special short messages transmitted over a mobile radio network (8) onto new second identification cards (91) located in mobile devices (9).

23. Information system (3) according to one of the claims 17 to 21, characterised in that it comprises an applications server (35) which has access to said database (36) and which hands over-client-specific information to an identification card programming device (7) in order to have it transferred onto new second identification cards (61).

24. Information system (3) according to one of the claims 17 to 23, characterised in that it comprises a gateway (37) which enables secured access of the applications server (35) to the fee collection services (10).

## Revendications

1. Procédé servant à transférer, sur de nouvelles cartes d'identification secondaires (61, 91), des renseignements enregistrés sur des cartes d'identification primaires (91), caractérisé en ce que les renseignements spécifiques aux clients enregistrés, sur des cartes d'identification primaires (91), à l'initiative de ce client, sont saisis par un système d'information (3) directement sur les cartes d'identification primaires qui se trouvent dans des terminaux, par l'intermédiaire d'un réseau de communications, et enregistrés dans des espaces mémoire d'une banque de données centrale (36) mis à la disposition de ces clients, et transmis par ce système d'information (3) aux cartes d'identification nouvelles secondaires (61, 91).

2. Procédé selon la revendication précédente, caractérisé en ce que le système d'information (3) saisit les renseignements spécifiques aux clients, au moyen de messages courts particuliers transmis par un réseau de téléphonie mobile (8), directement sur les cartes d'identification primaires (91) qui se trouvent dans des appareils mobiles (9).

3. Procédé selon l'une des revendications précédentes, caractérisé en ce que, au moins pour certains clients, les renseignements spécifiques aux clients sont gérés, dans le système d'information (3), au moyen de services fournis sur Internet.

4. Procédé selon l'une des revendications précédentes, caractérisé en ce qu'au moins certains des renseignements spécifiques aux clients déjà saisis par le système d'information (3) sont mis à jour, par ce système d'information (3), sur son initiative.

5. Procédé selon l'une des revendications précédentes, caractérisé en ce que le système d'information (3) transfère aux nouvelles cartes d'identification secondaires, qui se trouvent dans des terminaux, les renseignements spécifiques aux clients en passant par un réseau de communications.

6. Procédé selon l'une des revendications précédentes, caractérisé en ce que le système d'information (3) transfère les renseignements spécifiques aux clients aux nouvelles cartes d'identification secondaires (91), qui se trouvent dans des appareils mobiles (9), au moyen de messages courts particuliers transmis par un réseau de téléphonie mobile (8).

7. Procédé selon l'une des revendications 1 à 5, caractérisé en ce que le le système d'information (3) transfère les renseignements spécifiques aux clients aux nouvelles cartes d'identification secondaires (61) au moyen d'un appareil de programmation (7) des cartes d'identification.

8. Procédé selon l'une des revendications précédentes, caractérisé en ce que les nouvelles cartes d'identification secondaires (61, 91) comprennent des cartes d'identification qui sont du même type primaire que les cartes d'identification primaires précitées (91).

9. Procédé selon l'une des revendications 1 à 7, caractérisé en ce que les nouvelles cartes d'identification secondaires (61; 91) comprennent des cartes d'identification qui sont d'un nouveau type secondaire.

10. Procédé servant à mettre à jour dans un système de communications, sur des cartes d'identification (91), sur l'initiative de clients, des renseignements spécifiques aux clients, mis en mémoire, relatifs à des valeurs actuelles de renseignements correspondants, caractérisé en ce que les renseignements spécifiques aux clients sont saisis directement, en passant par un réseau de communications, par un système d'information (3), sur les cartes d'identification se trouvant dans des terminaux, et mis en mémoire dans des espaces de mémoire mis à la disposition de ces clients dans la banque de données centrale (36), en ce que les valeurs des renseignements spécifiques aux clients mis en mémoire dans la banque de données centrale (36) sont mises à jour, par le système d'information (3), avec les valeurs actuelles, et que les renseignements spécifiques aux clients et mis à jour sont transférés sur les cartes d'identification (91) qui se trouvent dans des terminaux.

11. Procédé selon la revendication précédente, caractérisé en ce que le système d'information (3) saisit directement sur les cartes d'identification (91) qui se trouvent dans des appareils mobiles (9) les renseignements spécifiques aux clients, au moyen de messages courts particuliers transmis par un réseau de téléphonie mobile (8)

12. Procédé selon la revendication 10 ou 11, caractérisé en ce que, au moins pour certains clients, les renseignements spécifiques aux clients sont gérés au moyen de services fournis sur Internet et transférés au système d'information (3).

13. Procédé selon l'une des revendications 10 à 12, caractérisé en ce que le système d'information (3) transfère, en passant par un réseau de communications, les renseignements spécifiques aux clients et mis à jour aux cartes d'identification (91) qui se trouvent dans des terminaux.

14. Procédé selon l'une des revendications 10 à 13, caractérisé en ce que le système d'information (3) transfère, au moyen de messages courts particuliers transmis par un réseau de téléphonie mobile (8), les renseignements spécifiques aux clients et mis à jour, aux cartes d'identification (91) qui se trouvent dans des appareils mobiles (9).

15. Procédé selon l'une des revendications 10 à 14, caractérisé en ce que les valeurs à jour mentionnées sont des numéros d'appel dans un réseau de communications.

16. Procédé selon l'une des revendications 10 à 15, caractérisé en ce que les valeurs à jour mentionnées sont des adresses URL dans un réseau de communications.

17. Système d'information (3) dans un réseau de communications (2, 8), caractérisé en ce qu'il comprend un centre de service (34) pour cartes d'identification qui saisit directement sur des cartes d'identification primaires se trouvant dans des terminaux, en passant par un réseau de communications, des renseignements spécifiques aux clients qui sont mis en mémoire, sur l'initiative de certains clients, sur des cartes d'identification primaires (61, 91) de ces clients et qui les met en mémoire dans la banque de données (36) du système d'information (3), un espace de mémoire dans cette banque de données (36) étant mis à la disposition d'un grand nombre de clients de ce réseau, afin de mettre en mémoire de façon centralisée les renseignements spécifiques aux clients.

18. Système d'information (3) selon la revendication précédente, caractérisé en ce qu'il comprend un centre de service (34) pour cartes d'identification qui saisit directement sur des cartes d'identification primaires (91) qui se trouvent dans des appareils mobiles (9), au moyen de messages courts particuliers transmis par un réseau de téléphonie mobile (8), des renseignements spécifiques aux clients.

19. Système d'information (3) selon la revendication 17 ou 18, caractérisé en ce qu'il comprend un serveur sur le réseau (32), qui offre des services sur Internet, services au moyen desquels, au moins pour certains clients, des renseignements spécifiques aux clients peuvent être gérés dans le système d'information (3).

20. Système d'information (3) selon l'une des revendications 17 à 19, caractérisé en ce qu'il comprend un serveur d'applications (35) qui peut accéder à la banque de données (36) et qui, sur son initiative, met à jour au moins certains renseignements spécifiques aux clients.

21. Système d'information (3) selon l'une des revendications 17 à 20, caractérisé en ce qu'il comprend un centre de service (34) pour cartes d'identification qui peut accéder à la banque de données (36) et qui transfère des renseignements spécifiques aux clients, par un réseau de communications, à de nouvelles cartes d'identification secondaires qui se trouvent dans des terminaux.

22. Système d'information (3) selon l'une des revendications 17 à 21, caractérisé en ce qu'il comprend un centre de service (34) pour cartes d'identification qui peut accéder à la banque de données (36) et qui transfère des renseignements spécifiques aux clients, au moyen de messages courts particuliers transmis par un réseau de téléphonie mobile (8), à de nouvelles cartes d'identification secondaires (91) qui se trouvent dans des appareils mobiles (9).

23. Système d'information (3) selon l'une des revendications 17 à 21, caractérisé en ce qu'il comprend un serveur d'applications (35) qui peut accéder à la banque de données (36) et qui transmet à un appareil de programmation (7) de cartes d'identification des renseignements spécifiques aux clients afin de les faire transférer de cet appareil à de nouvelles cartes d'identification secondaires (61).

24. Système d'information (3) selon l'une des revendications 17 à 23, caractérisé en ce qu'il comprend une passerelle (37) qui permet un accès sûr du serveur d'applications (35) à des services de saisie de redevances (10).
